# EUROPEAN PATENT APPLICATION

(11) **EP 4 401 165 A1**
(43) Date of publication of application: **17.07.2024**
(21) Application number: 23204800.9
(22) Date of filing: 20.10.2023
(51) Int. Cl.: H01M 4/36, H01M 4/38, H01M 10/0525

(54) **NEGATIVE ACTIVE MATERIAL FOR RECHARGEABLE LITHIUM BATTERY AND RECHARGEABLE LITHIUM BATTERY INCLUDING SAME**

(30) Priority: 10.01.2023 KR 20230003634
(71) Applicant: Samsung SDI Co., Ltd., Yongin-si, Gyeonggi-do 17084 (KR)
(72) Inventor: OH, Doori, 17084 Yongin-si (KR); SHIN, Changsu, 17084 Yongin-si (KR); KIM, Young-Min, 17084 Yongin-si (KR); PARK, Sunil, 17084 Yongin-si (KR); KANG, Eunji, 17084 Yongin-si (KR); WON, Jongmin, 17084 Yongin-si (KR); KIM, Yookyung, 17084 Yongin-si (KR); NAH, Jaehou, 17084 Yongin-si (KR); KIM, Youngugk, 17084 Yongin-si (KR)
(74) Representative: Marks & Clerk LLP

(57) **Abstract**

Disclosed are a negative active material for a rechargeable lithium battery and a rechargeable lithium battery including the same, and the negative active material for a rechargeable lithium battery including a silicon-carbon composite comprising silicon and amorphous carbon; and a coating layer positioned on a surface of the silicon-carbon composite, and comprising a metal hydroxide, wherein an amount of the coating layer is about 1 wt% to about 10 wt% based on about 100 wt% of the negative active material.

## Description

### BACKGROUND OF THE INVENTION

### (a) Field of the Invention

Embodiments of this disclosure relate to a negative active material for a rechargeable lithium battery and a rechargeable lithium battery including the same.

### (b) Description of the Related Art

Recently, the rapid development of electronic devices such as mobile phones, laptop computers, and electric vehicles using batteries has result in surprising increases in demand for rechargeable batteries with relatively high capacity and lighter weight.

As the negative active material for rechargeable lithium batteries, crystalline carbons such as graphite may be mainly used, but the carbonaceous material has low capacity of 360 mAh/g, and thus, researches for the silicon-based active material such as Si having a capacity of four time or more than that have been actively undertaken.

However, silicon has much higher volume expansion of about 300% than the crystalline carbon during charging and discharging, which cause the conductive network to break, thereby exhibiting poor cycle-life characteristics. Thus, the silicon-based active material is limited to practical use.

### SUMMARY

Some embodiments provide a negative active material for a rechargeable lithium battery exhibiting excellent cycle-life characteristics.

Another embodiment provides a rechargeable lithium battery including the negative active material.

Some embodiments provide a negative active material for a rechargeable lithium including a silicon-carbon composite including silicon and amorphous carbon; and a coating layer positioned on a surface of the silicon-carbon composite, and including a metal hydroxide. An amount of the coating layer is about 1 wt% to about 10 wt% based on about 100 wt% of the negative active material.

The metal hydroxide may include hydroxides of an alkali element. The metal hydroxide may include NaOH, LiOH, KOH, or combinations thereof.

The negative active material may have a BET specific surface area of about 0.5 m²/g to about 1.0 m²/g.

The silicon-carbon composite may further include crystalline carbon.

According to another embodiment, a rechargeable lithium battery including a negative electrode including the negative active material, a positive electrode, and an electrolyte, is provided.

At least some of the above and other features of the invention are set out in the claims.

A negative active material for a rechargeable lithium battery according to some embodiments may exhibit excellent cycle-life characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic diagram showing a rechargeable lithium battery according to one embodiment.
FIG. 2 is a SEM image of the negative active material according to Example 1.
FIG. 3 is a SEM image of the negative active material according to Comparative Example 1.
FIG. 4 is a graph showing the capacity retention of the cells according to Examples 1, 2, 4, and 5, and Comparative Examples 1 and 2.
FIG. 5 is a graph showing the X-ray diffraction peak intensity for the negative active materials according to Example 3 and Comparative Example 1.

### DETAILED DESCRIPTION

Hereinafter, embodiments of the present disclosure are described in detail. However, these embodiments are merely examples, the present invention is not limited thereto, and the subject matter of the present disclosure is defined by the scope of the appended claims, and equivalents thereof.

Terms used in the specification are used to explain embodiments, but are not intended to limit the present invention. Expressions in the singular include expressions in plural unless the context clearly dictates otherwise.

The term "combination thereof" may include a mixture, a laminate, a complex, a copolymer, an alloy, a blend, a reactant of constituents.

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

The drawings show that the thickness is enlarged in order to clearly show the various layers and regions, and the same reference numerals are given to similar parts throughout the specification. If an element, such as a layer, a film, a region, a plate, and the like is referred to as being "on" or "over" another part, it may include cases where it is "directly on" another element, but also cases where there is another element in between. In contrast, when an element is referred to as being "directly on" another element, there are no intervening elements present.

In some embodiments, herein, "layer" includes a shape totally formed on the entire surface or a shape partial surface, when viewed from a plane view.

In the specification, "or" is not to be construed in an exclusive sense, for example, "A or B" may be interpreted to include A, B, A+B, or the like.

In the present disclosure, when a definition is not otherwise provided, a particle diameter or size may indicate an average particle diameter. The average particle diameter indicates an average particle diameter (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation.

A negative active material for a rechargeable lithium battery according to some embodiments includes a silicon-carbon composite including silicon and amorphous carbon; and a coating layer positioned on a surface of the silicon-carbon composite, and including a metal hydroxide.

In the negative active material according to some embodiments, the coating including the metal hydroxide included in the coating layer may render to reduce a specific surface area. For example, the negative active material according to some embodiments may have a BET specific surface area of about 0.5 m²/g to about 1 m²/g, about 0.6 m²/g to about 1 m²/g, about 0.66 m²/g to about 1 m²/g, or about 0.66 m²/g to about 0.9 m²/g, which may be lower than a BET specific surface area of about 1.5 m²/g to about 2.5 m²/g of the negative active material without a coating layer. The BET may be measured by using ASAP2020.

Such a low specific surface area may allow the lithium consumption of the negative active material according to some embodiments to be suppressed during charge and discharge, thereby reducing an initial irreversible reaction, and thus, the battery irreversible capacity may be resultantly reduced in total charge and discharge cycles.

Because the coating layer is positioned by surrounding the surface of the silicon-carbon composite, the exposure of sites in which the silicon-carbon composite may react with lithium by expanding volume when silicon is charged and discharged, may be reduced, and thus, the irreversible reaction of lithium with silicon may be prevented.

The coating layer positioned by surrounding the surface of the silicon-carbon composite may suppress the exposure of pores which may be included in the silicon-carbon composite. Thus, the silicon-carbon composite may include closed pores. A metal hydroxide may be included inside the silicon-carbon composite. As such, because the exposure of pores may be suppressed, the problems of lithium being inserted into the pores during charging and discharging and no longer participating in the charging and the discharging reaction, cycle-life characteristics are thereby improved.

An amount of the coating layer is about 1 wt% to about 10 wt% based on 100 wt% of the negative active material. In some embodiments, an amount of the coating layer may be about 5 wt% to about 10 wt%, or about 8 wt% to about 10 wt% based on 100 wt% of the negative active material. If the amount of the coating layer is within these ranges, the coating layer may sufficiently cover the surface of the silicon-carbon composite, thereby more suitably reducing the irreversible sites.

The metal hydroxide may be hydroxides of an alkali element. For example, the metal hydroxide may be NaOH, LiOH, KOH, or combinations thereof. If the metal hydroxide included in the coating layer is the compound, the irreversible sites may be effectively decreased.

The inclusion of the coating layer including the metal hydroxide (e.g. NaOH) in the negative active material according to some embodiments may be confirmed by an XRD analysis using a CuKα ray. For example, if the XRD analysis is performed for the negative active material by using a CuKα ray, an exhibition of a peak at 2Θ of about 60 ° to about 65 ° may be indicated to include a metal hydroxide (e.g. NaOH) coating layer.

In the silicon-carbon composite, silicon may be nano silicon.

A particle diameter of silicon may be about 10 nm to about 1,000 nm, and according to some embodiments, may be about 20 nm to about 150 nm. If the particle diameter of the silicon is within the range, the extreme volume expansion caused during charge and discharge may be suppressed, and a breakage of the conductive path due to crushing of particle may be prevented.

The particle diameter of the silicon-carbon composite may be appropriately adjusted, and it is specifically limited thereto.

In the silicon-carbon composite, the amorphous carbon may be soft carbon, hard carbon, mesophase pitch carbide, sintered cokes, or combinations thereof.

According to some embodiments, the silicon-carbon composite may be silicon particles and the amorphous carbon coated on the surface of the silicon particles. For example, the silicon-carbon composite may include secondary particles in which silicon primary particles are agglomerated, and an amorphous carbon coating layer is positioned on a surface of the secondary particle. The amorphous carbon may be positioned between the silicon primary particles, for example, so that the silicon primary particles may be coated with the amorphous carbon. The silicon-carbon composite may also include a core in which silicon particles are distributed in an amorphous carbon matrix and an amorphous carbon coating layer coated on a surface of the core.

The secondary particle is positioned at the center of the Si-C composite, so it may be referred to as a core or a center part. The amorphous carbon coating layer may be referred to as an outer part or a shell.

If the silicon-carbon composite includes silicon and the amorphous carbon, a mixing ratio of silicon and the amorphous carbon may be about 80:20 to about 30:70 by weight ratio.

In some embodiments, the secondary particle or the core may further include crystalline carbon. If the silicon-carbon composite further includes crystalline carbon, the silicon-carbon composite may include a secondary particle in which silicon primary particles and crystalline carbon are agglomerated, and an amorphous carbon coating layer positioned on a surface of the secondary particle.

The crystalline carbon may be unspecified shaped, sheet, flake, spherical, or fiber shaped natural graphite or artificial graphite.

If the silicon-carbon composite further includes crystalline carbon, a resistance of the active material itself may be reduced, thereby inhibiting decreases in the initial cycle-life, and thus, the effect from the inclusion of the metal hydroxide may be more largely realized.

If the silicon-carbon composite further includes crystalline carbon, an amount of the amorphous carbon may be about 20 wt% to about 70 wt% based on the total 100 wt% of the silicon-carbon composite, the total amount of silicon and crystalline carbon may be about 80 wt% to about 30 wt%, herein, a mixing ratio of silicon and crystalline carbon may be about 80:20 by weight ratio to about 90:10 by weight ratio, or about 85:15 by weight ratio to about 90:10 by weight ratio.

If the amorphous carbon is coated, a thickness of the coating layer of the amorphous carbon may be about 1 nm to about 100 nm.

The negative active material according to some embodiments may be prepared by the following procedures.

Silicon particles with micrometer sizes are mixed with an organic solvent to prepare a dispersed liquid of silicon. The mixing may be performed by milling so that the size of the silicon particles may be reduced from micrometers to nanometers, and thus, nano silicon may be prepared. The milling may be performed by using a bead mill or a ball mill.

The organic solvent may suitably be solvents which do not oxidize the silicon particle and may be readily volatilized, and the example may be isopropyl alcohol, ethanol, methanol, butanol, N-methyl pyrrolidone, propylene glycol, or combinations thereof.

A mixing ratio of the silicon particle and the organic solvent may be about 5:95 by weight ratio to about 30:70 by weight ratio, or about 10:90 by weight ratio to about 25:75 by weight ratio. If the mixing ratio of the silicon particle and the organic solvent satisfies the range, the milling efficiency may be maximized.

The obtained silicon dispersed liquid may be spray dried to prepare a Si precursor. The spray drying may be performed at about 50 °C to about 200 °C. In the spray-drying, primary particles which are nano silicon may be agglomerated to prepare a secondary particle. If the spray drying is performed at the above temperature range, the agglomeration of the primary particles to be the secondary particles may be more suitably performed.

An admixing of crystalline carbon to the dispersed liquid of silicon may be further performed. A mixing ratio of silicon and crystalline carbon may be about 80:20 by weight ratio to about 90:10 by weight ratio, or about 85:15 by weight ratio to about 90:10 by weight ratio. If the mixing ratio of silicon and crystalline carbon is within the range, the electrical resistance may be well maintained.

If the crystalline carbon is added to the dispersed liquid of silicon, the resulting Si precursor may be secondary particles in which nano silicon primary particles and crystalline carbon are agglomerated.

The Si precursor is mixed with an amorphous carbon precursor. A mixing ratio of the Si precursor and the amorphous carbon precursor may be about 80:20 to about 30:70 by weight ratio. If the mixing ratio of the Si precursor and the amorphous carbon precursor is within the range, the excessive amorphous carbon is not included in the final negative active material, and thus, the more suitable utilization of silicon may be obtained and the excellent initial efficiency may be exhibited.

The amorphous carbon precursor may include coal pitch, meso pitch, mesophase pitch, petroleum pitch, meso carbon pitch, coal-based oil, petroleum-based heavy oil, or a polymer resin such as a phenol resin, a furan resin, a polyimide resin, or the like.

The obtained mixture may be then heat-treated to prepare a heat-treated product. The heat treatment may be performed at about 700 °C to about 1,100 °C for about 1 hour to about 5 hours. The heat treatment may be performed under an N₂ atmosphere or an argon atmosphere.

The heat treatment renders to convert the amorphous carbon precursor to the amorphous carbon which may be positioned to surround the surface of the secondary particle. The amorphous carbon may be positioned between the primary particles.

If the heat treatment is performed under the above atmospheres, while the oxidation of silicon and the production of SiC may be suppressed, the amorphous carbon may be effectively prepared, thereby reducing resistance of the active material resistance.

The silicon-carbon composite is mixed with a metal hydroxide. A mixing ratio of the silicon-carbon composite and the metal hydroxide is about 99:1 by weight ratio to about 90:10 by weight ratio, for example, about 95:5 by weight ratio to about 90:10 by weight ratio, or about 92:8 by weight ratio to about 90:10 by weight ratio.

The metal hydroxide may be hydroxides of an alkali element. The examples of the metal hydroxide may be NaOH, LiOH, KOH, or combinations thereof.

The resulting material may be heat-treated to prepare a heat-treated product. The heat treatment may be performed at about 900 °C to about 1,100 °C for about 1 hour to about 4 hours. The heat treatment may be performed under an N₂ atmosphere or an argon atmosphere.

In the heat-treatment, the metal hydroxide is dissolved to prepare a layer of a film form on a surface of the silicon-carbon composite, resulting in preparing a coating layer including the metal hydroxide on the surface of the silicon-carbon composite, thereby preparing the negative active material according to some embodiments.

Another embodiment provides a rechargeable lithium battery including a negative electrode, a positive electrode, and an electrolyte.

The negative electrode may include a current collector and a negative active material layer formed on the current collector and including the negative active material according to one embodiment.

The negative active material according to one embodiment may be included as a first negative active material and a crystalline carbon may be included as a second negative active material. A mixing ratio of the first negative active material and the second negative active material may be about 1:99 to about 50:50 by weight ratio. In some embodiments, the negative active material may include the first negative active material and second negative active material at a weight ratio of about 5:95 to about 20:80.

In the negative active material layer, the amount of the negative active material may be about 95 wt% to about 98 wt% based on the total 100 wt% of the negative active material layer.

The negative active material layer may include a binder, and may further include a conductive material. An amount of the binder may be about 1 wt% to about 5 wt% based on the total 100 wt% of the negative active material layer. An amount of the conductive material may be about 1 wt% to about 5 wt% based on the total 100 wt% of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamide imide, polyimides, or combinations thereof.

The aqueous binder may be a styrene-butadiene rubber (SBR), acrylated an styrene-butadiene rubber (ABR), acrylonitrile-butadiene rubber, an acryl rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acryl resin, a phenol resin, an epoxy resin, polyvinyl alcohol, or combinations thereof.

If the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The positive electrode may include a current collector and a positive active material layer formed on the current collector.

The positive electrode active material may include lithiated intercalation compounds that reversibly intercalate and deintercalate lithium ions. In some embodiments, one or more composite oxides of a metal selected from cobalt, manganese, nickel, and a combination thereof, and lithium, may be used. For example, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001 ≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulas, A is selected from Ni, Co, Mn, or combinations thereof; X is selected from Al, Ni, Co, Mn, Cr, Fe, Mg, Sr, V, a rare earth element, or combinations thereof; D' is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; L¹ is selected from Mn, Al, or combinations thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetylcellulose, polyvinyl chloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like, but is not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber, or the like; a metal-based material of a metal powder or a metal fiber including copper, nickel, aluminium, silver, and the like; a conductive polymer such as a polyphenylene derivative; or a mixture thereof.

The current collector may include Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the non-aqueous organic solvent is used in a mixture, the mixture ratio may be controlled in accordance with a desirable battery performance, and it may be well known to those skilled in the related art.

If the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may include methyl propionate, ethyl propionate, propyl propionate, or combinations thereof.

If the cyclic carbonate and the chain carbonate or the cyclic carbonate and the propionate-based solvent are mixed, they may be mixed in a volume ratio of about 1:1 to about 1:9 and thus performance of an electrolyte may be improved. In another embodiment, if the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

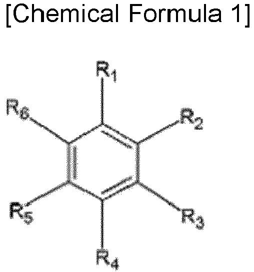

In Chemical Formula 1, R₁ to R₆ are the same or different and may each be selected from hydrogen, a halogen, a C1 to C10 alkyl group, a C1 to C10 haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The electrolyte may further include vinylethyl carbonate, vinylene carbonate, an ethylene carbonate-based compound represented by Chemical Formula 2 as an additive for improving cycle life.

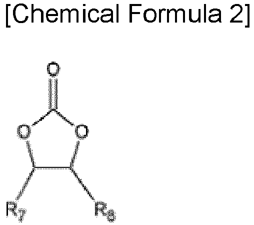

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato) phosphate), LiCl, Lil, LiB(C₂O₄)₂ (lithium bis(oxalato) borate: LiBOB), and lithium difluoro(oxalate)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

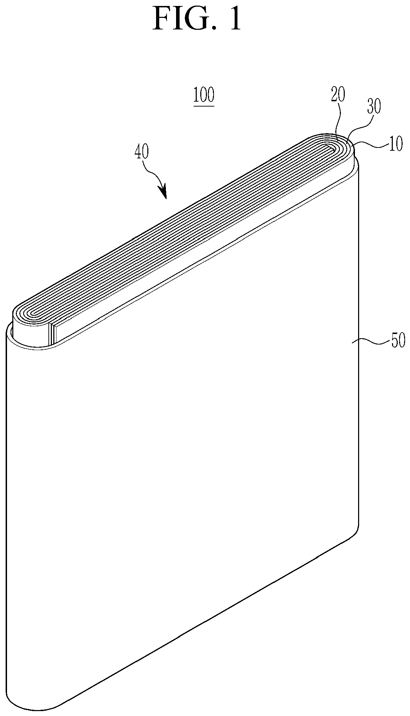

FIG. 1 is an exploded perspective view of a rechargeable lithium battery according to an embodiment. The rechargeable lithium battery according to some embodiments is illustrated as a prismatic battery but is not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

An ethanol solvent and silicon particles with a particle diameter of several micrometers were mixed at a weight ratio of 8.5:1.5 to prepare a silicon nano dispersed liquid by using a beads mill (Netzsch, Germany).

The silicon nano dispersed liquid was mixed with natural graphite at a weight ratio of 8.8:1.2, and then the resulting mixed liquid was spray-dried at 180 °C using a spray drier to prepare a Si precursor.

The Si precursor and meso pitch were mixed at 57:43 by weight ratio and the mixture was heat-treated at 900 °C under an N₂ atmosphere for 2 hours to prepare a silicon-carbon composite. The silicon-carbon composite included an agglomerated product, secondary particles in which nano silicon particles and natural graphite were agglomerated, and a soft carbon coating layer formed on the surface of the agglomerated product, and an amount of the nano silicon particles was 50 wt%, an amount of the soft carbon amorphous carbon was 43 wt%, and an amount of natural graphite was 7 wt%. The soft carbon coating layer had a thickness of 2 nm.

The silicon-carbon composite was mixed with NaOH at a weight ratio of 99:1 and agitated for 2 hours. The resulting mixture was heat-treated at 950 °C under an N₂ atmosphere for 2 hours. According to the heat treatment, a negative active material including a NaOH coating layer formed on the surface of the silicon-carbon composite was prepared. In the prepared negative active material, based on the total 100 wt% of the negative active material, an amount of the silicon-carbon composite was 99 wt% and an amount of the NaOH coating layer was 1 wt%.

97.5 wt% of the prepared negative active material, 1.5 wt% of carboxymethyl cellulose, and 1 wt% of a styrene butadiene rubber were mixed in a water solvent to prepare a negative active material layer slurry.

The negative active material slurry was coated on a Cu foil current collector, dried, and pressurized to prepare a negative electrode including the current collector and a negative active material layer formed on the current collector.

Using the negative electrode, a counter electrode, and an electrolyte, a rechargeable lithium cell was fabricated. As the electrolyte, 1 M LiPF₆ dissolved in a mixed solvent of ethylene carbonate and dimethyl carbonate (3:7 volume ratio) was used.

### (Example 2)

A negative active material was prepared by the same procedure as in Example 1, except that a mixing ratio of the silicon-carbon composite and NaOH was changed to be a weight ratio of 95:5. In the prepared negative active material, based on the total 100 wt% of the negative active material, an amount of the silicon-carbon composite was 95 wt% and an amount of the NaOH coating layer was 5 wt%.

The negative active material was used to fabricate a negative electrode and a half-cell by the same procedure as in Example 1.

### (Example 3)

A negative active material was prepared by the same procedure as in Example 1, except that a mixing ratio of the silicon-carbon composite and NaOH was changed to be a weight ratio of 92:8. In the prepared negative active material, based on the total 100 wt% of the negative active material, an amount of the silicon-carbon composite was 92 wt% and an amount of the NaOH coating layer was 8 wt%.

The negative active material was used to fabricate a negative electrode and a half-cell by the same procedure as in Example 1.

### (Example 4)

A negative active material was prepared by the same procedure as in Example 1, except that a mixing ratio of the silicon-carbon composite and NaOH was changed to be a weight ratio of 90:10. In the prepared negative active material, based on the total 100 wt% of the negative active material, an amount of the silicon-carbon composite was 90 wt% and an amount of the NaOH coating layer was 10 wt%.

The negative active material was used to fabricate a negative electrode and a half-cell by the same procedure as in Example 1.

### (Example 5)

A negative active material was prepared by the same procedure as in Example 1, except that LiOH was used instead of NaOH, and a mixing ratio of the silicon-carbon composite and LiOH was a weight ratio of 99:1. In the prepared negative active material, based on the total 100 wt% of the negative active material, an amount of the silicon-carbon composite was 99 wt% and an amount of the LiOH coating layer was 1 wt%.

The negative active material was used to fabricate a negative electrode and a half-cell by the same procedure as in Example 1.

### (Example 6)

A negative active material was prepared by the same procedure as in Example 1, except that LiOH was used instead of NaOH and a mixing ratio of the silicon-carbon composite and LiOH was changed to be a weight ratio of 95:5. In the prepared negative active material, based on the total 100 wt% of the negative active material, an amount of the silicon-carbon composite was 95 wt% and an amount of the LiOH coating layer was 5 wt%.

The negative active material was used to fabricate a negative electrode and a half-cell by the same procedure as in Example 1.

### (Comparative Example 1)

A negative electrode and a half-cell were fabricated by the same procedure as in Example 1, except that the silicon-carbon composite prepared by Example 1 was used as a negative active material.

### (Comparative Example 2)

A negative active material was prepared by the same procedure as in Example 1, except that a mixing ratio of the silicon-carbon composite and NaOH was changed to be a weight ratio of 88:12. In the prepared negative active material, based on the total 100 wt% of the negative active material, an amount of the silicon-carbon composite was 88 wt% and an amount of the NaOH coating layer was 12 wt%.

The negative active material was used to fabricate a negative electrode and a half-cell by the same procedure as in Example 1.

Experimental Example 1) Measurement of SEM and evaluation of physical properties of active material

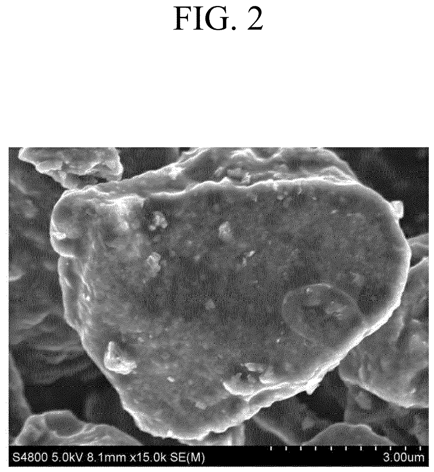

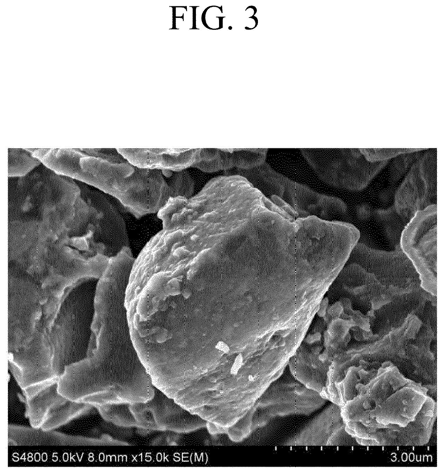

The SEM images of the negative active materials according to Example 1 and Comparative Example 1 are shown in FIG. 2 and FIG. 3, respectively. The BET specific surface areas of the negative active materials according to Examples 1 to 6 and Comparative Examples 1 or 2 were measured. The results are shown in Table 1.

The pore volumes of the negative active materials according to Examples 1 to 6 and Comparative Examples 1 or 2 were measured by a BJH method. The results are shown in Table 1.

**Table 1**

| | BET specific surface area (m²/g) | Pore volume (%) |
|---|---|---|
| Example 1 | 0.95 | 0.9 |
| Example 2 | 0.85 | 0.7 |
| Example 3 | 0.75 | 0.6 |
| Example 4 | 0.66 | 0.4 |
| Example 5 | 1.00 | 0.9 |
| Example 6 | 0.95 | 0.8 |
| Comparative Example 1 | 1.9 | 1.0 |
| Comparative Example 2 | 0.67 | 0.7 |

As shown in FIG. 2 and FIG. 3, the active material of Example 1 had more uniform and smoother surface than that of Comparative Example 1. As shown in Table 1, the BET specific surface area and pore volume of Example 1 significantly reduced compared to that of Comparative Example 1.

### Experimental Example 2) Evaluation of specific capacity and efficiency

The half-cells according to Examples 1 to 6 and Comparative Examples 1 to 2 were charged and discharged at 0.1 C once to measure charge and discharge capacity. The measured discharge capacity is shown in Table 2, as specific capacity.

A ratio of discharge capacity relative to charge was calculated. The results are shown in Table 2, as efficiency.

**Table 2**

| | Specific capacity (mAh/g) | Efficiency (%) |
|---|---|---|
| Example 1 | 1580 | 86.5 |
| Example 2 | 1550 | 87.2 |
| Example 3 | 1525 | 87.5 |
| Example 4 | 1480 | 88.1 |
| Example 5 | 1550 | 86.2 |
| Example 6 | 1480 | 86.7 |
| Comparative Example 1 | 1600 | 86.0 |
| Comparative Example 2 | 1400 | 87.8 |

### Experimental Example 3) Evaluation of cycle-life characteristic

The half-cells according to Example 1, Example 2, Example 4 and Example 5, and Comparative Examples 1 and 2 were charged and discharged for 400 cycles under the following conditions.

Charge: 1.0 C/ cut-off: 4.0 V-0.05 C

Discharge: 1.0 C/ cut-off: 2.5 V

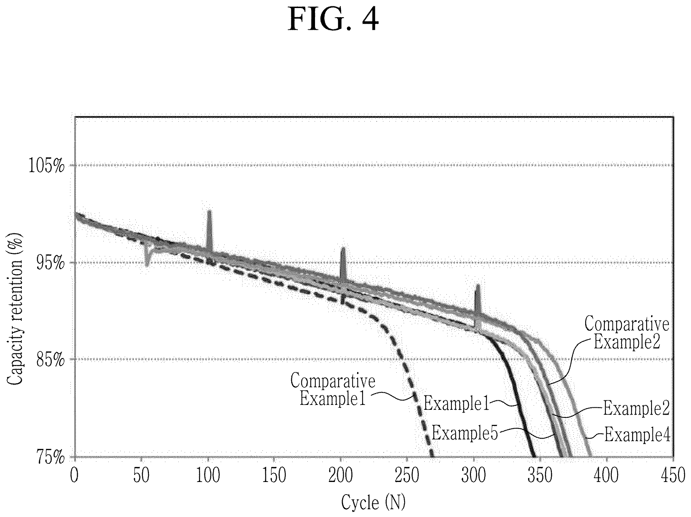

A ratio of the discharge capacity at each cycle relative to the discharge capacity at 1^{st} cycle was measured. The results are shown in FIG. 4 (in FIG. 4, cycle(N) represents a number for the charge and discharge cycles).

As shown in FIG. 4, the negative active materials including the NaOH coating layer according to Examples 1, 2, and 4 and the negative active material including the LiOH coating layer according to Example 5 exhibited excellent cycle-life characteristics, compared to the negative active material of Comparative Example 1 without them.

As indicated in FIG. 4, the cycle-life was abruptly dropped at about 300 cycles in Example 1, at 340 cycles in Example 2, and at 360 cycles in Example 4, but at about 200 cycles in Comparative Example 1.

Comparative Example 2 using NaOH at a large amount exhibited similar efficiency and cycle-life characteristics to the Examples, but as shown in Table 2, the abruptly deteriorated capacity was exhibited, indicating an unsuitable level of capacity to practical use.

### Experimental Example 4) Measurement of XRD

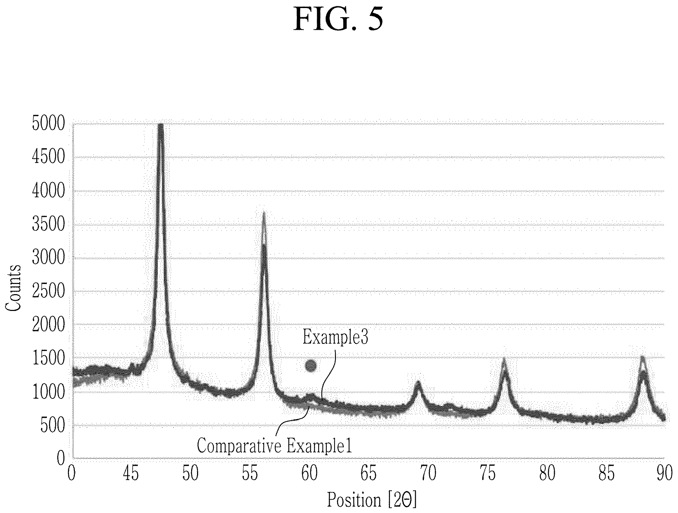

The X-ray diffraction peak intensities for the negative active materials according to Example 3 and Comparative Example 1 were measured by using a CuKα ray. The results are shown in FIG. 5. In FIG. 5, the peak exhibited at 2Θ of 60 ° to 65 ° was a peak corresponding to a NaOH coating. The negative active material of Example 3 had the peak related thereto, but Comparative Example 1 had no peak related thereto, and thus, it can be clearly shown that the negative active material of Example 3 included the NaOH coating layer.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery, comprising:
a silicon-carbon composite comprising silicon and amorphous carbon; and
a coating layer positioned on a surface of the silicon-carbon composite, and comprising a metal hydroxide,
wherein an amount of the coating layer is about 1 wt% to about 10 wt% based on about 100 wt% of the negative active material.

2. The negative active material for a rechargeable lithium battery as claimed in claim 1, wherein the metal hydroxide comprises hydroxides of an alkali element.

3. The negative active material for a rechargeable lithium battery as claimed in claim 1, wherein the metal hydroxide comprises NaOH, LiOH, KOH, or combinations thereof.

4. The negative active material for a rechargeable lithium battery as claimed in any one of claims 1 to 3, wherein the negative active material has a BET specific surface area of about 0.5 m²/g to 1 m²/g.

5. The negative active material for a rechargeable lithium battery as claimed in any one of claims 1 to 4, wherein the silicon-carbon composite further comprises crystalline carbon.

6. A rechargeable lithium battery, comprising:
a negative electrode comprising the negative active material of any one of claims 1 to 5;
a positive electrode; and
an electrolyte.
